# EUROPEAN PATENT SPECIFICATION

(11) **EP 4 015 389 B1**
(45) Date of publication and mention of the grant of the patent: **10.04.2024**
(21) Application number: 20383125.0
(22) Date of filing: 21.12.2020
(51) Int. Cl.: B64D 13/06, B64D 41/00, B64D 27/24, B64C 23/06, B64D 15/04

(54) **AN ENERGY MANAGEMENT SYSTEM FOR AN AIRCRAFT**
ENERGIEVERWALTUNGSSYSTEM FÜR EIN FLUGZEUG
SYSTÈME DE GESTION D'ÉNERGIE POUR UN AVION

(43) Date of publication of application: 22.06.2022
(73) Proprietor: Airbus Operations, S.L.U., 28906 Getafe (ES)
(72) Inventor: ALVARO GRANERO, David, 28906 GETAFE (LK); REDONDO GARCIA, Daniel, 28906 Getafe (ES); MARTINO GONZALEZ, Esteban, 28906 Getafe (ES); PRIETO PADILLA, Juan Tomas, 2806 Getafe (ES)

(56) References cited:
- EP-A1- 2 871 128
- EP-A1- 3 219 620
- EP-A2- 2 557 038
- US-A- 4 917 332
- US-A- 5 150 859
- US-A1- 2016 355 272
- US-A1- 2016 376 918

## Description

### TECHNICAL FIELD OF THE INVENTION

The present invention belongs to the field of the energy management system of an aircraft, and its relation with a pneumatic and electrical air distribution system. Particularly, the invention relates to the provision of a wingtip vortex rotor in an aircraft equipped with a hybrid bleed system (pneumatic and electrical), adapted to supply compressed air -coming from the bleed system and/or an electrical compressor- to air consumer equipments of the aircraft.

The object of the invention is to provide an energy management system adapted to run a wingtip vortex rotor in different operating modes depending on both the aircraft operating condition and the aircraft flight condition.

An aircraft equipped with a hybrid bleed system is known from EP2557038 A2. An aircraft equipped with wingtip vortex rotors is known from US2016376918 A1.

### BACKGROUND OF THE INVENTION

### Air distribution system in an aircraft

In gas turbine engines, air is normally taken from compressor stages upstream of the fuel-burning chamber(s). Once taken, this bleed air is channeled from said compressor stages of the engine to various locations within the aircraft by an air management system comprising in turn a network of ducts, valves and regulators. Consequently, such channeling means are to be adapted to withstand the high temperature and pressure of the bleed air. Because of its high temperature and pressure, this bleeding air is used to operate air consumer equipment such as the Air Cycle Machines of the Environmental Control System (ECS), the Wing Anti-Ice system (WAIS) and other minor air consumers. Depending on the engine rating and air consumer requirements to be fed, a wide range of pressure and temperature need to be managed, which entails different energy cost, for instance, air conditioning (i.e. ECS) is driven by the available pressure, and WAIS is driven by available temperature.

Classic architectures of bleed air system extract bleed air from the gas turbine compressor at two different stages via respective ports. One of these ports is located at a low-intermediate compressor stage (the so-called Intermediate Port, 'IP'), while the second port is located at an intermediate-high compressor stage (the so-called High Port, 'HP'). These two ports allow extracting the bleed air at different engine rating conditions.

These classic architectures could experience leakages, which could potentially lead to problems when operating the aircraft. Due to its inherent effect in the overall performance, detection means should be installed along the entire route of the channels, and fail-safe architectures should also be installed in order to isolate different aircraft zones once a ducting leakage is detected.

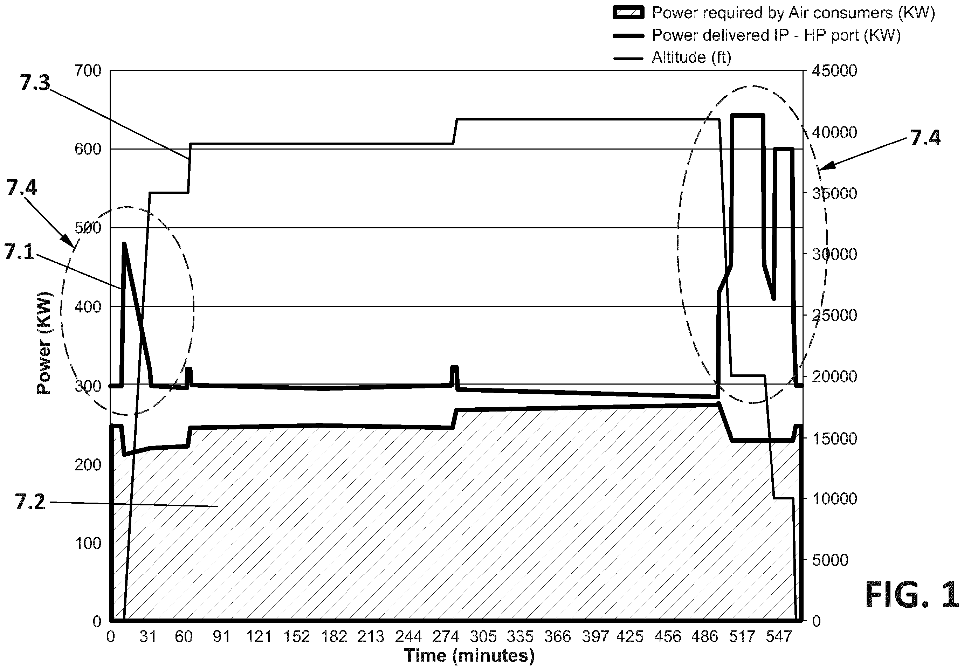

Furthermore, from on-ground to in-flight, external air conditions drastically change. This need to be compensate by the onboard air management system by regulating the air bleeding from each of the two ports (IP or HP ports). Hence, the overall air management system (which exclusively relies on bleed air) must be sized to operate at any planned flight phase, involving a significant energy loss during take-off/climb and descent/holding phases. Details of this energy loss can be seen in Figure 1, where it is depicted a conventional IP - HP air bleed system power delivering (7.1) in comparison with power required (7.2) by air consumers throughout the different flight phases (7.3) experienced in an entire mission. Peak energy losses (7.4) are remarkable at the mentioned take-off/climb and descent/holding phases.

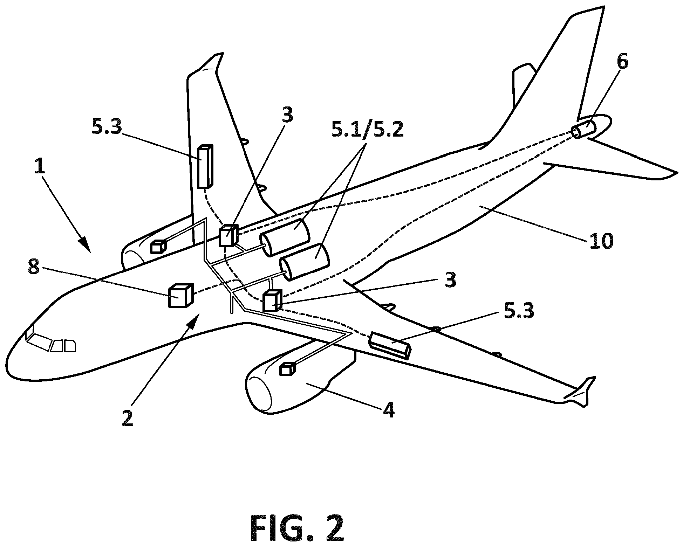

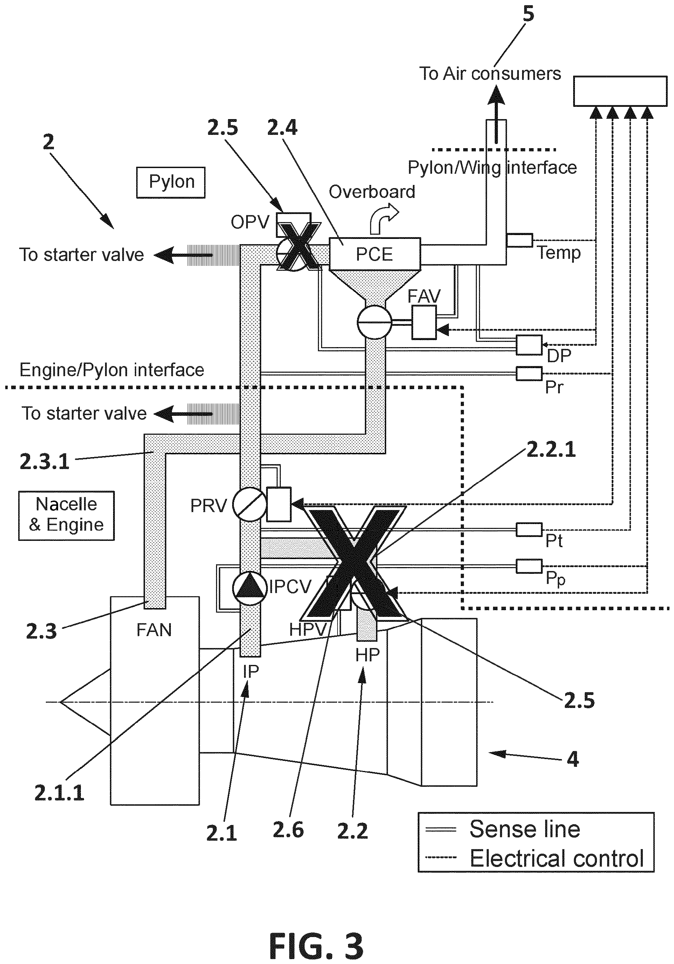

In new and future aircraft models (specifically in those with Ultra-High By-Pass Ratio (UHBR) engines that provide higher HP port temperatures with lower 'Fan port' pressures), the above problems are accentuated. For these reasons, a Hybrid Bleed System was developed. This hybrid system takes into account flight parameters in order to selectively feed air consumer equipments by the traditional air bleed system and/or by additional electrical compressors. Main benefit of this hybrid system is that HP bleed ports from the engine can be removed, so that the maximum temperature and pressure of the bleed air is reduced by design, and the bleed system can be simplified significantly. The drawback of this architecture is that additional electrical energy needs to be extracted from the engines to run the additional electrical compressors. Details of this Hybrid Bleed System can be seen in Figure 2 and Figure 3.

### Aircraft energy management system

The use of wingtip turbines has been object of study since the late 1980s due to its potential benefits. These studies were mainly focused on turbines operating in two modes: rotating and fixed. Rotating turbine operating mode showed a recovery of the energy of the vortex generated at the wingtip, transforming it into electrical energy that can be used at the aircraft, while fixed turbine operating mode showed a drag reduction by alleviating this vortex.

Further developments based on these wingtip turbines proved that these turbines were capable of recovering energy in emergency conditions, thus providing similar functionalities than the RAT (Ram Air Turbine). These turbines require a maintenance costs about 25% lower than the maintenance costs of the RAT, and entail a lower weight than the RAT system at ISO power conditions.

These previous studies showed significant benefits for a small type of aircraft, however they were focused on larger aircraft models, as they were the closest development able to implement the required architectural changes. At the time, the benefits were not considered enough to compensate the risks, and such studies were discontinued.

Therefore, there is a need in the aerospace industry for providing a new wingtip turbine device that offers clear benefits to the operability of an aircraft equipped with a Hybrid Bleed System that satisfies the requirements of air consumers with the optimum energy extracted from the gas turbine engines.

### SUMMARY OF THE INVENTION

The present invention overcomes the above mentioned drawbacks by providing an energy management system for an aircraft that being adapted to operate in different modes is able to recover the energy of the wingtip vortex, reduce the aerodynamic induced drag and generate thrust, depending on the aircraft operating and flight conditions.

In a first inventive aspect, the invention provides an energy management system for an aircraft, according to claim 1.

The invention provides a new energy management system that improves the overall operation of the aircraft under each one of the operating modes of the wingtip rotor unit.

Under the turbine mode, the energy management system is able to satisfy the extra need of electrical energy to run the electrical compressors of the Hybrid Bleed System, without extracting this energy from the main engines.

This capacity of providing power can be used in emergency conditions, allowing the elimination of the RAT, which removes its need of installation in the aircraft and its recurrent maintenance costs, at the same time that contributes to a weight reduction in the aircraft. It is to be noted that one of the benefits of this systems is the elimination of the extraction/retraction system, structure and structural reinforcements, and the associated failure modes management, as well as added redundancy.

Under the propeller mode, the energy management system is able to produce thrust in symmetrical or asymmetrical conditions, provided the wingtip rotor unit is installed and running on one or both of the wingtips of the aircraft. In addition, this thrust can be generated in flight direction or against it. In the latter case, the Thrust Reverser Unit (TRU) requirement could be minimized. In addition, this thrust offers the opportunity to enhance the lateral control of the aircraft (yaw movement), which would also lead to a potential downsizing of the Vertical Tail Plane (VTP) and the Rudder.

Under the minimum drag mode, the energy management system is able to recover part of the energy from the wingtip vortex by reducing the induced drag linked to the wake vortex. In this mode, blades may be locked in a clockwise position at a pre-established pitch angle position, or rotating at a pre-established speed to maximize the induced drag reduction.

The invention generates other significant benefits to the aircraft, as a fuel burn reduction due to the improvement in the efficiency of the engine, and the reduction in Max Zero Fuel weight and aerodynamic drag.

In addition, the invention enables the integration of advanced engines (UHBR turbofans) in aircrafts equipped with Hybrid Bleed system (Electrical WAIS & Bleedless APU).

In a second inventive aspect, the invention provides a method for supplying energy to an aircraft, according to claim 12.

In a third inventive aspect, not covered by the appended claims, there is defined an aircraft comprising an energy management system according to any of the embodiments of the first inventive aspect.

In a fourth inventive aspect, not covered by the appended claims, there is defined a data processing apparatus comprising means for carrying out the method according to any of the embodiments of the second inventive aspect.

In a fifth inventive aspect, not covered by the appended claims, there is defined a computer program comprising instructions which, when the program is executed by a computer, cause the computer to carry out the method according to any of the embodiments of the second inventive aspect.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic graph of a conventional IP, HP air bleed system power delivering in comparison with power required by air consumers.
- Figure 2: This figure shows a schematic representation of an aircraft with an air management system (based on a Hybrid Bleed System) according to the invention.
- Figure 3: This figure shows a schematic architecture of the air bleed system of the air management system of the invention.
- Figure 4: This figure shows a schematic representation of an aircraft mission profile using the air management system of the invention throughout the flight phases.
- Figure 5: This figure shows a schematic representation of the wingtip rotor unit of the invention in rotating and fixed states. The rotating state may correspond to the propeller or turbine operating mode, and the fixed state corresponds to the minimum drag operating mode.

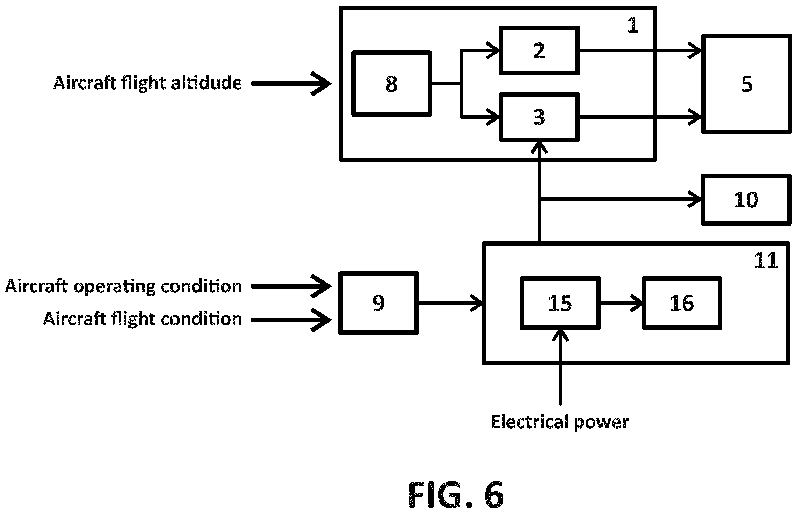

- Figure 6: This figure shows a schematic representation of the energy management system of the invention.

### DETAILED DESCRIPTION OF THE INVENTION

As it will be appreciated by one skilled in the art, aspects of the present invention may be embodied as an energy management system, a method for supplying energy to an aircraft, a data processing apparatus, a computer program, or an aircraft.

Figure 1 depicts a schematic graph of a conventional IP - HP air bleed system power delivering (7.1) in comparison with the power required (7.2) by air consumers throughout a complete flight.

The graph compares the power required (7.2) by air consumers in kW vs the power delivered (7.1) by conventional IP - HP air bleed system (also in kW). Superimposed to the former graphs, there is an overview of the flight phases (7.3) through which aircraft passes in a complete flight, in particular taking altitude as a reference to place the aircraft in each of such flight phases.

In this exemplary mission profile, there is a mismatch between power supplied by the conventional air bleed system and required by the air consumers both at the beginning and end of the flight, that is, when aircraft is on-ground or close to it below a certain flight altitude.

Left-ordinate axis of the graph indicates power (in kW), while right-ordinate axis indicates flight altitude (in ft).

Abscissa axis refers to flight time (in minutes). Figure 2 depicts a schematic representation of an aircraft (10) comprising the air management system (1) of the invention.

The air management system (1) comprises an air bleed system (2) that extracts air from an IP port (2.1) of the gas turbine engine (4), which is in fluid connection with Air Conditioning Packs (5.1) of the ECS or with Vapor Cycle Machine Packs (5.2), which need lower air pressure than the conventional Air Conditioning Packs (5.1).

The air management system (1) further comprises two electrical compressors (3) positioned within the belly fairing of the aircraft (10), along with the Air Conditioning Packs (5.1) or the Vapor Cycle Machine Packs (5.2) of the ECS.

Traditionally, the IP bleed port (2.1) is also in fluid communication with the WAIS (5.3) in order to convey pressurized air thereto. However, in particular embodiments, the WAIS (5.3) may be electrical so the traditional ducting for conveying pressured air is no longer needed. Instead, wiring connection has to be deployed.

The air management system (1) of the invention further permits to remove the traditional APU bleed ducting, usually required to connect the APU (6) with the WAIS (5.3) and the Air Conditioning Packs (5.1)/Vapor Cycle Machine Packs (5.2) to provide either pneumatic or electrical energy thereto. Now, APU pneumatic mode is no longer needed by this air management system (1). Only electrical mode is used to supply power to the electrical compressor (3) and to another power consumers such as batteries or the electrical WAIS (5.3).

The air management system (1) further comprises an air management control unit (8) electrically connected to both the air bleed system (2) and the electrical compressor(s) (3) to selectively operate them based on the aircraft flight altitude. In particular, the air management control unit is electrically connected to some valves of the air bleed system (2) to allow the bleed air coming from the single port either to pass through or being cut-off or reducing the flow rate.

Figure 3 depicts a schematic architecture of the hybrid bleed system of the invention. The hybrid bleed system is depicted over a conventional air bleed system in which the no longer needed elements are crossed out.

In comparison with the conventional air bleed system, it can be seen that HP port (2.2) (that is, the port located at a higher compressor stage) is no longer used. Thus, the HP ducting (2.2.1) sections and related valves (the OverPressure Valve (OPV) (2.5), and the High Pressure Valve (HPV) (2.6)) are no longer needed. Specifically, the OPV (2.5) is no longer needed as maximum IP port pressure remains below 90 psig. within the present invention, and the HPV (2.6) can also be suppressed since the air extracted from the remaining IP port (2.1) does not reach such a high temperature and pressure.

Air extracted from the remaining IP port (2.1) is controlled via the Pressure Regulating Valve ('PRV'). The valve ('IPCV') interposed between IP port and the joining point where formerly IP ducting and HP ducting were brought together (to avoid, inter alia, reverse flow) is still of application to shut-off the flow of extracted air form remaining IP port (2.1). Nevertheless, in particular embodiments, IPCV may be deleted as there is no risk of reverse flow in the IP port of air coming from the HP port as prior art pneumatic schemes does.

Only one port, IP port (2.1) coming from the compressor stage of the gas turbine engine (4) is appreciated. Additionally, there is a third port (2.3) in fluid communication with the fan, specifically designed to extract cooling air therefrom and direct it to a pre-cooler (2.4). Since air reaching the pre-cooler (2.4) from the hot side (that is, from the IP duct) is not as hot as with the conventional HP port (2.2) of the air bleed system, pre-cooler is specifically designed to operate with the bleed air extracted from the single port (i.e. the IP port). This entails a pre-cooler size reduction of about 50%.

Once the IP compressed air has been cooled down in the pre-cooler (2.4), it is directed to the air consumers (5) as the arrow points out. It is to be noted that, although only WAIS (5.3) and ECS (5.1, 5.2) are represented as air consumers (5), other minor air consumers may be used, such as fuel tank inerting system, engine starting system, water and waste, and/or hydraulic reservoirs pressurization.

It is to be noted that the present air management system (1) regulates conveyed air at around 80°C - 100°C contrary to nowadays temperature regulation (IP - HP bleed systems) at 200°C.

Further, single port (2.1) (IP port) location is reduced by 2-3 stages because low pressure requirement of Vapor Cycle Machine Packs (5.2) above 1500 ft (457 m) although not shown herein for illustrative purposes.

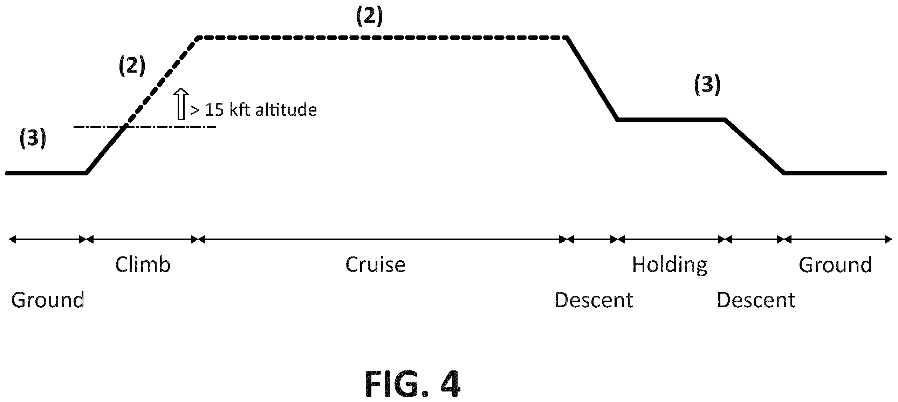

Figure 4 depicts an exemplary aircraft mission profile using the air management system (1) of the invention throughout the flight phases. If the at least one electrical compressor (3) supplies compressed air to at least one air consumer (5), it is represented in continuous line. On the other hand, when the air bleed system (2) exclusively supplies compressed air to the at least one air consumer, it is represented in dashed line.

It is to be noted that, for illustrative purposes, no overlap between operation of the air bleed system (2) and operation of the at least one electrical compressor (3) is shown, but this situation of overlap is of interest at the interphase when compressed air source (2, 3) switches.

According to the invention, the criteria follow by the air management control unit (8) to operate the air bleed system (2) and/or the at least one electrical compressor (3) upon receiving aircraft flight altitude (or the corresponding predefined flight phase) is summarized as follows:
- below a pre-determined altitude, preferably 15000 ft (4572 m).
   ∘ in taxiing, the at least one electrical compressor (3) supplies compressed air to at least one air consumer (5);
   ∘ in taking-off, the at least one electrical compressor (3) supplies compressed air to at least one air consumer (5);
   ∘ in climbing, the at least one electrical compressor (3) supplies compressed air to at least one air consumer (5) up to the pre-determined altitude;
- above the pre-determined altitude:
   ∘ still in climbing, the air bleed system (2) exclusively supplies compressed air to the at least one air consumer (5);
   ∘ in cruise, the air bleed system (2) supplies compressed air to at least one air consumer (5); and
- once cruise phase ends:
   ∘ in descending, holding, and landing, the at least one electrical compressor (3) supplies compressed air to at least one air consumer (5).

In other words, as the aircraft (10) passes from one phase to another, the air management control unit (8) receives the corresponding input and operates the corresponding compressed air source (bleed air system (2) and/or electrical compressor (3)) via the corresponding valves or directly by the electrical compressor.

As it was already mentioned, since air bleed system (2) exclusively operates in favorable conditions from energy cost point of view (high altitude and relative high speed), the air bleed system (2) architecture is sized according to cruise phase flight conditions, which encompasses the majority of the flight.

Energy-demanding flight phases such as on-ground operation, take-off, or even the first portion of climbing, as well as other phases like descent (or approaching) and holding relies exclusively in pressurized air supplied by the electrical compressor(s) (3).

Therefore, the electrical compressor(s) (3) adapts the delivered pressure to the required pressure by the air consumer (5) upon indication from the air management control unit.

In order to prevent smell events in the cabin, the air source feeding the electrical compressor may be external air (not bled from the engines). This will provide a fresh flow mode up to low altitude cruise conditions (i.e. 31kft).

In addition to the air management system (1), the energy management system of the invention further comprises at least one wingtip rotor unit (11), and an energy management control unit (9). The wingtip rotor unit (11) is movably mounted on the wingtip (17) of the aircraft to self-align the axis of the wingtip rotor unit (11) with the vortex core in accordance with the aircraft pitch. The wingtip rotor unit (11) comprises a generator (15) with a connected rotor having a hub and a set of blades (16) with a twisted airfoil profile. The blades (16) are rotatably connected to the hub for adjusting the pitch angle of the blades. The energy management control unit (9) is configured to receive an input relative to both the aircraft operating condition and the aircraft flight condition to selectively operate the wingtip rotor unit (11) according to one of the following operating modes:
- a minimum drag mode, in which the blades (16) are locked in position,
- a propeller mode, in which electrical power is supplied to the generator (15) of the wingtip rotor unit (11) to act as a motor rotating the blades in order to provide thrust to the aircraft (10),
- a turbine mode, in which the rotation of the blades (16) supplies energy to the aircraft (10) and/or to the at least one electrical compressor (3) of the air management system (1).

According the invention, the aircraft operating condition comprises at least one of the following conditions:
- engine rotation speed,
- engine idle operating,
- aircraft under electrical emergency event,
and the aircraft flight condition comprises at least one of the following conditions:
- a flight mode comprising a one engine inoperative flight mode,
- a pre-determined flight altitude and/or flight phase among one of the following: take-off and landing.

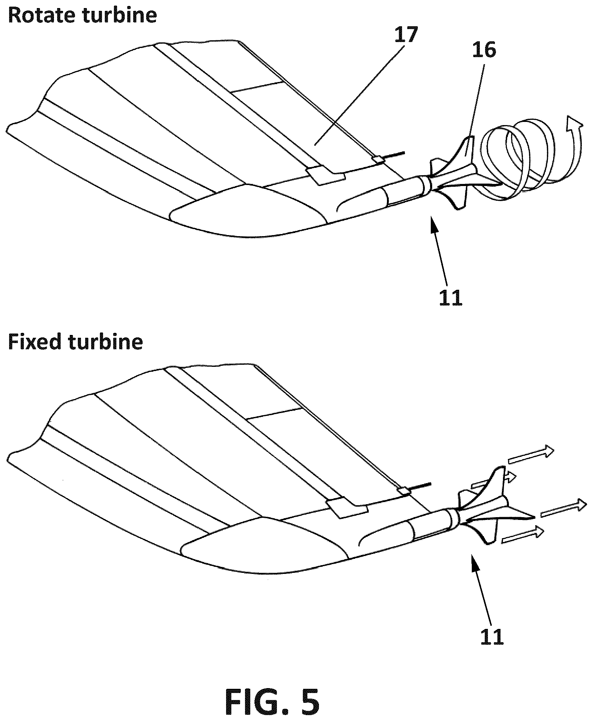

Figure 5 shows a schematic representation of the wingtip rotor unit (11) of the invention in rotating and fixed states. The rotating state may correspond to the propeller or turbine operating mode, and the fixed state corresponds to the minimum drag operating mode.

According to another preferred embodiment, the energy management control unit (9) is configured to operate the wingtip rotor unit (11) in minimum drag mode when the engine rotation speed is higher than a given idle set point.

Preferably, when the wingtip rotor unit (11) is operated in the minimum drag mode, the set of blades (16) are fixed in a position in which each blade pitch is adjusted such that the angle of the generated airflow is such that the resulting net lift of the blades minimizes the generated drag and reduces the rotational energy of the vortex, thus reducing induced drag.

According to another preferred embodiment, the energy management control unit (9) is configured to operate the wingtip rotor unit (11) in propeller mode when one of the following conditions is detected:
- the flight phase is Take-Off or Landing, or
- the aircraft is in one engine inoperative flight mode, or
- the aircraft is in an emergency situation.

Preferably, the aircraft (10) comprises at least one electrical battery and an auxiliary power unit (6) usually hold in its tail cone, and wherein, when the wingtip rotor unit (11) is operated in propeller mode, the electrical power supplied to the generator (15) of the wingtip rotor unit (11) is supplied by the battery or by the auxiliary power unit (6).

According to another preferred embodiment, the energy management control unit (9) is configured to operate in a turbine mode when one of the following conditions is detected:
- at least one engine operating in idle, or
- the aircraft is in one engine inoperative flight mode, or
- there is an electrical emergency situation.

Preferably, when the wingtip rotor unit (11) is operated in turbine mode, blades (16) are pitch-controlled to obtain a desired rotation speed.

According to another preferred embodiment, the airfoil of the blades (16) may vary its shape and form a twist angle along the span of the blade in order to maximize aerodynamic efficiency.

As mentioned, the energy management system of the invention may operate in different modes:
- minimum drag mode,
- propeller mode,
- turbine mode,
- and a combination of the above (when a different mode is set on each wingtip).

In minimum drag mode:
- Induced drag reduction is generated by de-swirling blades on the wingtip.
- The blades can be locked in position & pitch controlled to provide the optimum Lift/Drag setting.
- The position of the blades in a locked position can be fixed clockwise to best adapt to the flow conditions.
- The design of each of the blades includes individual twist and airfoil profile along the span resulting from the optimized benefits in net terms throughout the mission envelope.
- The flow around the blades is such that the resulting net lift compensates the generated drag and reduces the wake rotational energy, thus reducing induced drag.
- This operational mode would be the nominal operating condition with engine settings higher than a given idle set point.

In propeller mode:
- Thrust is generated by means of injecting electrical power to the wingtip rotor unit generator, to act as a motor.
- This mode can be used for, Take-Off, Landing, One Engine Inoperative (OEI), or other emergency situations.

In turbine mode:
- Electrical power is generated by means of the wingtip rotor unit.
- The blades are set loose and the rotation speed controlled by means of the blades pitch angle.
- This operational mode would be used in engine idle cases, OEI, Total Engine Flame Out (TEFO), or other electrical emergency situations.

A combination of modes may happened, such as:
- Minimum drag-Minimum drag: mainly during normal operation Take-Off, Climb & Cruise,
- Minimum drag-Turbine: mainly in failure cases,
- Turbine-Turbine: mainly in descent & failure cases,
- Minimum drag-Propeller: mainly in failure cases,
- Propeller-Propeller: mainly during normal operation Take-Off, Climb & failure cases,
- Turbine-Propeller: mainly in failure cases.

## Claims

1. An energy management system for an aircraft (10) comprising:
- an air management system (1) comprising:
∘ at least one air consumer (5);
∘ at least one source of external air;
∘ at least one gas turbine engine (4) having a single port (2.1) located at a low-intermediate compressor stage of the gas turbine engine (4);
∘ an air bleed system (2) in fluid communication with the at least one gas turbine engine (4) via the single port (2.1) of the gas turbine engine (4), the air bleed system (2) being configured to supply compressed air to the at least one air consumer (5);
∘ at least one electrical compressor (3) in fluid communication with the source of external air and configured to supply compressed air to the at least one air consumer (5);
∘ an air management control unit (8) configured to receive an input relative to the aircraft flight altitude, and selectively operate the air bleed system (2) and/or the at least one electrical compressor (3),
- at least one wingtip rotor unit (11) movable mounted on the wingtip (17) of an aircraft (10), comprising a generator (15) with a connected rotor having a hub, and a set of blades (16) with a twisted airfoil profile and rotatably connected to the hub for adjusting the pitch angle, and
- an energy management control unit (9) configured to receive an input relative to the aircraft operating and flight conditions, and selectively operate the wingtip rotor unit (11) according to one of the following operating modes, based on the received input:
∘ a minimum drag mode, in which the blades (16) are locked in position or rotating at a desired speed,
∘ a propeller mode, in which electrical power is supplied to the generator (15) of the wingtip rotor unit (11) to rotate the blades in order to provide thrust to the aircraft (10),
∘ a turbine mode, in which the rotation of the blades (16) supplies energy to the aircraft (10) and/or to the at least one electrical compressor (3) of the air management system (1),
wherein the aircraft operating condition comprises at least one of the following:
- engine rotation speed,
- engine idle operating,
- aircraft under electrical emergency event,
wherein the aircraft flight condition comprises at least one of the following:
- a flight mode comprising a one engine inoperative flight mode,
- a pre-determined flight altitude and/or flight phase comprising taxiing, take-off, climb, cruise, descent, holding, and landing,
and, wherein the air management control unit (8) is configured to selectively operate the air bleed system (2) and/or the at least one electrical compressor (3) according to the received input, so that:
- in taxiing, the at least one electrical compressor (3) supplies compressed air to at least one air consumer (5);
- in taking-off, the at least one electrical compressor (3) supplies compressed air to at least one air consumer (5);
- in climbing, the at least one electrical compressor (3) supplies compressed air to at least one air consumer (5) up to the pre-determined flight altitude, being the pre-determined altitude preferably 15000 ft (4572 m); then, the air bleed system (2) supplies compressed air to the at least one air consumer (5);
- in cruise, the air bleed system (2) supplies compressed air to at least one air consumer (5); and
- in descending, holding, and landing, the at least one electrical compressor (3) supplies compressed air to at least one air consumer (5).

2. An energy management system, according to claim 1, wherein the energy management control unit (9) is configured to operate the wingtip rotor unit (11) in minimum drag mode when the engine rotation speed is higher than a given idle set point.

3. An energy management system, according to any preceding claims, wherein when the wingtip rotor unit (11) is operated in the minimum drag mode, the set of blades (16) are fixed in a position in which each blade pitch is adjusted so that the resulting net lift compensates the generated drag.

4. An energy management system, according to any preceding claims, wherein the energy management control unit (9) is configured to operate the wingtip rotor unit (11) in propeller mode when one of the following conditions is detected:
- the flight phase is Take-Off or Landing, or
- the aircraft is in one engine inoperative flight mode, or
- the aircraft is in an emergency situation.

5. An energy management system, according to any preceding claims, wherein the aircraft (10) comprises at least one electrical battery and an auxiliary power unit (6) hold in its tail cone, and wherein, when the wingtip rotor unit (11) is operated in propeller mode, the electrical power supplied to the generator (15) of the wingtip rotor unit (11) is supplied by the battery or by the auxiliary power unit (6).

6. An energy management system, according to any preceding claims, wherein the energy management control unit (9) is configured to operate the wingtip rotor unit in a turbine mode when one of the following conditions is detected:
- at least one engine operating in idle, or
- the aircraft is in one engine inoperative flight mode, or
- there is an electrical emergency situation.

7. An energy management system, according to any preceding claims, wherein when the wingtip rotor unit (11) is operated in turbine mode, blades (16) are pitch-controlled to obtain a desired rotation speed.

8. An energy management system, according to any preceding claims, wherein the airfoil of the blades (16) forms a twist angle along the span of the blade.

9. An energy management system, according to any preceding claims, wherein the air bleed system (2) architecture is sized according to cruise phase flight conditions.

10. An energy management system, according to any preceding claims, wherein the at least one electrical compressor (3) is configured to adapt the supplied compressed air according to the flight phase and/or altitude.

11. An energy management system, according to any preceding claims, wherein the air bleed system (2) is in fluid communication with each gas turbine engine (4) of the aircraft (10) via respective single ports (2.1) located at respective compressor stages of each gas turbine engine (4), and the air management system (1) comprises two electrical compressors (3).

12. Method for supplying energy to an aircraft (10), the method comprising:
- providing an energy management system according to any of claims 1 to 11,
- receiving by the air management control unit (8) an input relative to the aircraft flight altitude, and operate the air bleed system (2) and/or the at least one electrical compressor (3) based on the received input,
- receiving by the energy management control unit (9) an input relative to the aircraft operating and flight conditions, and operate the wingtip rotor unit (11) according to one operating mode, based on the received input.

## Patentansprüche

1. Energiemanagementsystem für ein Luftfahrzeug (10), umfassend:
- ein Luftmanagementsystem (1), umfassend:
∘ mindestens einen Luftverbraucher (5);
∘ mindestens eine Außenluftquelle;
∘ mindestens ein Gasturbinentriebwerk (4) mit einer Einzelöffnung (2.1), die an einer unteren Zwischenkompressorstufe des Gasturbinentriebwerks (4) angeordnet ist;
∘ ein Zapfluftsystem (2) in Fluidverbindung mit dem mindestens einen Gasturbinentriebwerk (4) über die Einzelöffnung (2.1) des Gasturbinentriebwerks (4), wobei das Zapfluftsystem (2) dazu ausgebildet ist, dem mindestens einen Luftverbraucher (5) verdichtete Luft zuzuführen;
∘ mindestens einen Elektrokompressor (3) in Fluidverbindung mit der Außenluftquelle, der dazu ausgebildet ist, dem mindestens einen Luftverbraucher (5) verdichtete Luft zuzuführen;
∘ eine Luftmanagementsteuereinheit (8), die dazu ausgebildet ist, eine Eingabe relativ zur Luftfahrzeugflughöhe zu empfangen und das Zapfluftsystem (2) und/oder den mindestens einen Elektrokompressor (3) selektiv zu betreiben,
- mindestens eine auf der Tragflächenspitze (17) eines Luftfahrzeugs (10) beweglich montierte Tragflächenspitzenrotoreinheit (11), die einen Generator (15) mit einem verbundenen Rotor mit einer Nabe und einen Satz Blätter (16) mit einem verdrehten aerodynamischen Profil, die mit der Nabe zum Einstellen des Anstellwinkels drehbar verbunden sind, umfasst, und
- eine Energiemanagementsteuereinheit (9), die dazu ausgebildet ist, eine Eingabe relativ zu den Luftfahrzeugbetriebs- und flugzuständen zu empfangen und die Tragflächenspitzenrotoreinheit (11) basierend auf der empfangenen Eingabe entsprechend einem der folgenden Betriebsmodi selektiv zu betreiben:
∘ einem Modus des geringsten Luftwiderstands, in dem die Blätter (16) in ihrer Stellung verriegelt sind oder sich bei einer gewünschten Geschwindigkeit drehen,
∘ einem Propellermodus, in dem dem Generator (15) der Tragflächenspitzenrotoreinheit (11) elektrischer Strom zugeführt wird, um die Blätter zu drehen, um dem Luftfahrzeug (10) Schub zu geben,
∘ einem Turbinenmodus, in dem dem Luftfahrzeug (10) und/oder dem mindestens einen Elektrokompressor (3) des Luftmanagementsystems (1) durch die Drehung der Blätter (16) Energie zugeführt wird,
wobei der Luftfahrzeugbetriebszustand mindestens eines von Folgendem umfasst:
- Triebwerksdrehzahl,
- Triebwerksleerlauf,
- Luftfahrzeug bei einem elektrischen Notfallereignis,
wobei der Luftfahrzeugflugzustand mindestens eines von Folgendem umfasst:
- einen Flugmodus, der einen One-Engine-Inoperative-Flugmodus umfasst,
- eine vorbestimmte Flughöhe und/oder Flugphase, die Rollen, Abheben, Fliegen im Steigflug, Fliegen mit Reisegeschwindigkeit, Fliegen im Sinkflug, Fliegen einer Warteschleife und Landen umfasst,
und wobei die Luftmanagementsteuereinheit (8) dazu ausgebildet ist, das Zapfluftsystem (2) und/oder den mindestens einen Elektrokompressor (3) entsprechend der empfangenen Eingabe selektiv zu betreiben, sodass:
- beim Rollen der mindestens eine Elektrokompressor (3) mindestens einem Luftverbraucher (5) verdichtete Luft zuführt;
- beim Abheben der mindestens eine Elektrokompressor (3) mindestens einem Luftverbraucher (5) verdichtete Luft zuführt;
- beim Fliegen im Steigflug der mindestens eine Elektrokompressor (3) bis zu der vorbestimmten Flughöhe, bei der es sich um eine vorbestimmte Höhe von vorzugsweise 15000 ft (4572 m) handelt, mindestens einem Luftverbraucher (5) verdichtete Luft zuführt; danach das Zapfluftsystem (2) dem mindestens einen Luftverbraucher (5) verdichtete Luft zuführt;
- beim Fliegen mit Reisegeschwindigkeit das Zapfluftsystem (2) mindestens einem Luftverbraucher (5) verdichtete Luft zuführt; und
- beim Fliegen im Sinkflug, Fliegen einer Warteschleife und Landen der mindestens eine Elektrokompressor (3) mindestens einem Luftverbraucher (5) verdichtete Luft zuführt.

2. Energiemanagementsystem nach Anspruch 1, wobei die Energiemanagementsteuereinheit (9) dazu ausgebildet ist, die Tragflächenspitzenrotoreinheit (11) im Modus des geringsten Luftwiderstands zu betreiben, wenn die Triebwerksdrehzahl einen vorgegebenen Leerlaufsollwert überschreitet.

3. Energiemanagementsystem nach einem der vorhergehenden Ansprüche, wobei, wenn die Tragflächenspitzenrotoreinheit (11) im Modus des geringsten Luftwiderstands betrieben wird, der Satz Blätter (16) in einer Stellung festgestellt ist, in der jede Blattanstellung so eingestellt ist, dass der resultierende Nettoauftrieb den erzeugten Luftwiderstand ausgleicht.

4. Energiemanagementsystem nach einem der vorhergehenden Ansprüche, wobei die Energiemanagementsteuereinheit (9) dazu ausgebildet ist, die Tragflächenspitzenrotoreinheit (11) im Propellermodus zu betreiben, wenn einer der folgenden Zustände erkannt wird:
- die Flugphase ist Abheben oder Landen oder
- das Luftfahrzeug ist im One-Engine-Inoperative-Flugmodus oder
- das Luftfahrzeug ist in einer Notsituation.

5. Energiemanagementsystem nach einem der vorhergehenden Ansprüche, wobei das Luftfahrzeug (10) mindestens eine elektrische Batterie und ein Hilfsstromaggregat (6), das in seinem Heckkonus enthalten ist, umfasst und wobei, wenn die Tragflächenspitzenrotoreinheit (11) im Propellermodus betrieben wird, der dem Generator (15) der Tragflächenspitzenrotoreinheit (11) zugeführte elektrische Strom von der Batterie oder von dem Hilfsstromaggregat (6) zugeführt wird.

6. Energiemanagementsystem nach einem der vorhergehenden Ansprüche, wobei
die Energiemanagementsteuereinheit (9) dazu ausgebildet ist, die Tragflächenspitzenrotoreinheit in einem Turbinenmodus zu betreiben, wenn einer der folgenden Zustände erkannt wird:
- mindestens ein Triebwerk ist im Leerlauf oder
- das Luftfahrzeug ist im One-Engine-Inoperative-Flugmodus oder
- es liegt eine elektrische Notsituation vor.

7. Energiemanagementsystem nach einem der vorhergehenden Ansprüche, wobei, wenn die Tragflächenspitzenrotoreinheit (11) im Turbinenmodus betrieben wird, die Anstellwinkel der Blätter (16) geregelt werden, um eine gewünschte Drehzahl zu erhalten.

8. Energiemanagementsystem nach einem der vorhergehenden Ansprüche, wobei das aerodynamische Profil der Blätter (16) einen Verdrehwinkel entlang der Blattspannweite bildet.

9. Energiemanagementsystem nach einem der vorhergehenden Ansprüche, wobei die Größe der Architektur des Zapfluftsystems (2) in Abhängigkeit von Reisegeschwindigkeitsphasenflugzuständen festgelegt ist.

10. Energiemanagementsystem nach einem der vorhergehenden Ansprüche, wobei der mindestens eine Elektrokompressor (3) dazu ausgebildet ist, die zugeführte verdichtete Luft in Abhängigkeit von der Flugphase und/oder der Flughöhe anzupassen.

11. Energiemanagementsystem nach einem der vorhergehenden Ansprüche, wobei das Zapfluftsystem (2) über jeweilige Einzelöffnungen (2.1), die an jeweiligen Kompressorstufen jedes Gasturbinentriebwerks (4) angeordnet sind, in Fluidverbindung mit jedem Gasturbinentriebwerk (4) des Luftfahrzeugs (10) steht und das Luftmanagementsystem (1) zwei Elektrokompressoren (3) umfasst.

12. Verfahren zum Zuführen von Energie zu einem Luftfahrzeug (10), wobei das Verfahren Folgendes umfasst:
- Bereitstellen eines Energiemanagementsystems nach einem der Ansprüche 1 bis 11,
- Empfangen, durch die Luftmanagementsteuereinheit (8), einer Eingabe relativ zur Luftfahrzeugflughöhe und Betreiben des Zapfluftsystems (2) und/oder des mindestens einen Elektrokompressors (3) basierend auf der empfangenen Eingabe,
- Empfangen, durch die Energiemanagementsteuereinheit (9), einer Eingabe relativ zu den Luftfahrzeugbetriebs- und flugzuständen und Betreiben der Tragflächenspitzenrotoreinheit (11) entsprechend einem Betriebsmodus basierend auf der empfangenen Eingabe.

## Revendications

1. Système de gestion d'énergie pour un avion (10), comportant :
- un système (1) de gestion d'air comportant :
∘ au moins un consommateur (5) d'air ;
∘ au moins une source d'air externe ;
∘ au moins un moteur (4) à turbine à gaz doté d'une unique prise (2.1) située au niveau d'un étage intermédiaire bas de compresseur du moteur (4) à turbine à gaz ;
∘ un système (2) de prélèvement d'air en communication fluidique avec le ou les moteurs (4) à turbine à gaz via l'unique prise (2.1) du moteur (4) à turbine à gaz, le système (2) de prélèvement d'air étant configuré pour fournir de l'air comprimé au(x) consommateur(s) (5) d'air ;
∘ au moins un compresseur électrique (3) en communication fluidique avec la source d'air externe et configuré pour fournir de l'air comprimé au(x) consommateur (s) (5) d'air ;
∘ une unité (8) de commande de gestion d'air configurée pour recevoir une entrée se rapportant à l'altitude de vol de l'avion, et faire fonctionner sélectivement le système (2) de prélèvement d'air et/ou le ou les compresseurs électriques (3),
- au moins une unité (11) de rotor de bout d'aile montée mobile sur le bout (17) d'aile d'un avion (10), comportant un générateur (15) auquel est lié un rotor doté d'un moyeu, et un ensemble d'aubes (16) présentant un profil aérodynamique torsadé et lié de façon pivotante au moyeu pour régler l'angle de pas, et
- une unité (9) de commande de gestion d'énergie configurée pour recevoir une entrée se rapportant aux conditions de fonctionnement et de vol de l'avion, et faire fonctionner sélectivement l'unité (11) de rotor de bout d'aile selon un des modes de fonctionnement suivants, d'après l'entrée reçue :
∘ un mode de traînée minimum, dans lequel les aubes (16) sont bloquées en position ou tournent à une vitesse souhaitée,
∘ un mode hélice, dans lequel une puissance électrique est fournie au générateur (15) de l'unité (11) de rotor de bout d'aile pour faire tourner les aubes afin de fournir une poussée à l'avion (10),
∘ un mode turbine, dans lequel la rotation des aubes (16) fournit de l'énergie à l'avion (10) et/ou au(x) compresseur(s) électrique(s) (3) du système (1) de gestion d'air,
la condition de fonctionnement de l'avion comportant au moins une des conditions suivantes :
- vitesse de rotation du moteur,
- fonctionnement au ralenti du moteur,
- avion soumis à un événement d'urgence électrique, la condition de vol de l'avion comportant au moins une des conditions suivantes :
- un mode de vol comportant un mode de vol avec un moteur hors service,
- une altitude de vol et/ou une phase de vol prédéterminée comportant le roulage, le décollage, la montée, la croisière, la descente, l'attente et l'atterrissage,
et l'unité (8) de commande de gestion d'air étant configurée pour faire fonctionner sélectivement le système (2) de prélèvement d'air et/ou le ou les compresseurs électriques (3) selon l'entrée reçue, de telle sorte que :
- lors du roulage, le ou les compresseurs électriques (3) fournissent de l'air comprimé à au moins un consommateur (5) d'air ;
- lors du décollage, le ou les compresseurs électriques (3) fournissent de l'air comprimé à au moins un consommateur (5) d'air ;
- lors de la montée, le ou les compresseurs électriques (3) fournissent de l'air comprimé à au moins un consommateur (5) d'air jusqu'à l'altitude de vol prédéterminée, l'altitude prédéterminée étant de préférence de 15000 pieds (4572 m); puis le système (2) de prélèvement d'air fournit de l'air comprimé au(x) consommateur (s) (5) d'air ;
- en croisière, le système (2) de prélèvement d'air fournit de l'air comprimé à au moins un consommateur (5) d'air ; et
- lors de la descente, de l'attente et de l'atterrissage, le ou les compresseurs électriques (3) fournissent de l'air comprimé à au moins un consommateur (5) d'air.

2. Système de gestion d'énergie selon la revendication 1, l'unité (9) de commande de gestion d'énergie étant configurée pour faire fonctionner l'unité (11) de rotor de bout d'aile en mode de traînée minimum lorsque la vitesse de rotation du moteur est supérieure à un point de réglage de ralenti donné.

3. Système de gestion d'énergie selon l'une quelconque des revendications précédentes, l'ensemble d'aubes (16) étant, lorsque l'unité (11) de rotor de bout d'aile est exploitée dans le mode de traînée minimum, fixé dans une position où le pas de chaque aube est réglé de telle sorte que la portance nette résultante compense la traînée générée.

4. Système de gestion d'énergie selon l'une quelconque des revendications précédentes, l'unité (9) de commande de gestion d'énergie étant configurée pour faire fonctionner l'unité (11) de rotor de bout d'aile en mode hélice lorsqu'une des conditions suivantes est détectée :
- la phase de vol est le décollage ou l'atterrissage, ou
- l'avion est en mode de vol avec un moteur hors service, ou
- l'avion est en situation d'urgence.

5. Système de gestion d'énergie selon l'une quelconque des revendications précédentes, l'avion (10) comportant au moins une batterie électrique et un compartiment pour groupe auxiliaire (6) tenu dans son cône de queue et, lorsque l'unité (11) de rotor de bout d'aile est exploitée en mode hélice, la puissance électrique fournie au générateur (15) de l'unité (11) de rotor de bout d'aile étant fournie par la batterie ou par le groupe auxiliaire (6) de bord.

6. Système de gestion d'énergie selon l'une quelconque des revendications précédentes,
l'unité (9) de commande de gestion d'énergie étant configurée pour faire fonctionner l'unité de rotor de bout d'aile en mode turbine lorsqu'une des conditions suivantes est détectée :
- au moins un moteur fonctionne au ralenti, ou
- l'avion est en mode de vol avec un moteur hors service, ou
- il y a une situation d'urgence électrique.

7. Système de gestion d'énergie selon l'une quelconque des revendications précédentes, les aubes (16) étant, lorsque l'unité (11) de rotor de bout d'aile est exploitée en mode turbine, commandées en pas pour obtenir une vitesse de rotation souhaitée.

8. Système de gestion d'énergie selon l'une quelconque des revendications précédentes, le profil aérodynamique des aubes (16) formant un angle de torsion suivant l'envergure de l'aube.

9. Système de gestion d'énergie selon l'une quelconque des revendications précédentes, l'architecture du système (2) de prélèvement d'air étant dimensionnée selon des conditions de vol en phase de croisière.

10. Système de gestion d'énergie selon l'une quelconque des revendications précédentes, le ou les compresseurs électriques (3) étant configurés pour adapter l'air comprimé fourni en fonction de la phase et/ou de l'altitude de vol.

11. Système de gestion d'énergie selon l'une quelconque des revendications précédentes, le système (2) de prélèvement d'air étant en communication fluidique avec chaque moteur (4) à turbine à gaz de l'avion (10) via des prises (2.1) respectives uniques situées au niveau d'étages respectifs de compresseur de chaque moteur (4) à turbine à gaz, et le système (1) de gestion d'air comportant deux compresseurs électriques (3).

12. Procédé de fourniture d'énergie à un avion (10), le procédé comportant :
- la mise en place d'un système de gestion d'énergie selon l'une quelconque des revendications 1 à 11,
- la réception par l'unité (8) de commande de gestion d'air d'une entrée se rapportant à l'altitude de vol de l'avion, et l'exploitation du système (2) de prélèvement d'air et/ou du ou des compresseurs électriques (3) d'après l'entrée reçue,
- la réception par l'unité (9) de commande de gestion d'énergie d'une entrée se rapportant aux conditions de fonctionnement et de vol de l'avion, et l'exploitation de l'unité (11) de rotor de bout d'aile selon un mode de fonctionnement, d'après l'entrée reçue.
